Europäisches Patentamt

European Patent Office

Office européen des brevets

(19)

(11) Publication number: **0 068 461**
**B1**

# (12) EUROPEAN PATENT SPECIFICATION

(45) Date of publication of patent specification: **29.10.86**

(51) Int. Cl.⁴: **C 08 F 214/08, C 08 F 2/22**

(21) Application number: **82105638.9**

(22) Date of filing: **25.06.82**

(54) **High vinylidene chloride content interpolymer coating resins and method of preparation.**

(30) Priority: **25.06.81 US 277305**

(43) Date of publication of application:
**05.01.83 Bulletin 83/01**

(45) Publication of the grant of the patent:
**29.10.86 Bulletin 86/44**

(84) Designated Contracting States:
**DE FR GB IT NL**

(56) References cited:
**EP-A-0 005 344**
**GB-A- 654 342**
**US-A-3 879 359**
**US-A-4 351 929**
**US-A-4 451 632**

**CHEMICAL ABSTRACTS, vol.82, no.16, April 21, 1975, page 142, abstract no.100212s, Columbus, Ohio (US)**

(73) Proprietor: **THE DOW CHEMICAL COMPANY**
**2030 Dow Center Abbott Road P.O. Box 1967 Midland, MI 48640 (US)**

(72) Inventor: **Gibbs, Dale Sabin**
**2607 Mt. Vernon Drive**
**Midland Michigan, 48640 (US)**
Inventor: **Treptow, Warren Lee**
**3308 Lawndale Drive**
**Midland Michigan, 48640 (US)**

(74) Representative: **Casalonga, Axel et al**
**BUREAU D.A. CASALONGA OFFICE JOSSE & PETIT Morassistrasse 8**
**D-8000 München 5 (DE)**

Courier Press, Leamington Spa, England.

## Description

The homopolymer of vinylidene chloride as generally insoluble at room temperature in such organic solvents as tetrahydrofuran. However, when vinylidene chloride is interpolymerized with one or more copolymerizable monomers, useful materials result which may be soluble at room temperature in organic solvents. Typical copolymerizable monomers include acrylonitrile, methacrylonitrile, methyl acrylate (or other $C_2$—$C_{15}$ alcohol esters of acrylic or methacrylic acid, e.g., methyl methacrylate) acrylic acid, itaconic acid, chloroacrylonitrile, vinyl chloride, vinyl bromide, and vinylidene bromide. Particularly, useful organic solvents include mixtures of toluene and tetrahydrofuran.

These materials find particular use in the cellophane industry where a very thin (usually about 0.05—0.15 mil (0.00127—0.00381 mm) coating of a so-called "soluble" vinylidene chloride copolymer resin is deposited from a solvent, a mixture or solvents, on both sides of a cellophane film to serve as a water vapor barrier film. In addition, the coating promotes retention of water, thus helping to prevent brittle fracture of the film and also provide a heat sealable outer coating.

For manufacturers concerned with applying such thin coatings to substrates such as cellophane, the solubility of a polymer in a solvent and the water vapor transmission rate (WVTR) of a coated substrate are particularly important properties. Usually the desired properties include as low a WVTR as possible coupled with low temperature solubility of the polymer in an inexpensive solvent or solvent mixture.

The WVTR of vinylidene chloride interpolymers is directly related to the mole percent of vinylidene chloride in the interpolymer. Therefore, it is generally advantageous to get the mole percent of vinylidene chloride as high as possible consistent with solubility in one or more desired organic solvent systems. However, a high vinylidene chloride content generally means that strong crystallizing forces are present in the interpolymer reducing solubility.

As the mole percent of vinylidene chloride is raised in an interpolymer series, the interpolymers change from products which crystallize slowly, are amorphous and dissolve readily, to interpolymers which crystallize rapidly and are highly crystalline and much more difficult to dissolve. A small amount of interpolymeric composition variation can result in interpolymers unsuitable for coating purposes because they fail to dissolve adequately in a solvent system or because they crystallize out of solution after initially dissolving. Careful control of solution turbidity, hereinafter called "haze", as measured in terms of percent light transmission is essential to use of these interpolymers for coating purposes. It has been found that excessively slow crystallization rates result in "blocking" during machine operations when a coated film is wound in large rolls before crystallization is generally complete. "Blocking", as used herein, is the tendency of the interpolymer coating to adhere to another coated layer. When blocking is particularly severe, it may not be possible to unwind a roll of coated film.

A combination of choice of monomers and method of polymerization thereof has now been discovered which is believed to be superior to anything known heretofore for attainment of optimum combined barrier and solubility properties. The resulting interpolymer having polymerized therein vinylidene chloride, methyl methacrylate, itaconic acid and a comonomer selected from the group consisting of acrylonitrile, methacrylic acid and methacrylonitrile have a high vinylidene chloride content, a narrow composition range, and enhanced solubility in organic solvents. They also provide a low permeability to moisture and to oxygen and a good crystallization rate for a film cast from an interpolymer solution.

EP—A—0 005 344 teaches a vinylidene chloride based interpolymer having good solubility properties and a method for the polymerization thereof. However the WVTR of said polymer is not sufficiently low and the polymerization process comprises adding an end-shot comonomer to the polymerization medium which needs a separate feed supply system and makes the polymerization more difficult to run and enhances the capital investment required.

The process according to the present invention avoids the above drawbacks.

It has now surprisingly been found that interpolymers, having polymerized therein vinylidene chloride, methyl methacrylate, itaconic acid and comonomer selected from the group consisting of acrylonitrile, methacrylic acid and methacrylonitrile which have a high vinylidene chloride content result from a process for preparing, in aqueous emulsion, controlled interpolymer compositions having polymerized therein (a) from 86 to 92 mole percent vinylidene chloride; (b) from 14 to 8 mole percent of a mixture of methyl methacrylate and a comonomer selected from the group consisting of acrylonitrile, methacrylic acid and methacrylonitrile, said mixture of methyl methacrylate and the comonomer having a molar ratio of the comonomer to methyl methacrylate of from 0.2:1 to 5:1; and (c) from 0.5 to 1.0 weight percent itaconic acid based on weight of (a) plus (b); said interpolymer compositions having a relative viscosity of from about 1.3 to 1.7 at 25°C as a 1 percent solution in tetrahydrofuran; said interpolymer compositions being capable of forming generally haze-free solutions when present in an amount of 20 percent solids in a solvent mixture comprising 65 weight percent tetrahydrofuran and 35 weight percent toluene, based on solvent mixture weight, by a process comprising the sequential steps of:

(A) initiating emulsion polymerization by forming a seed latex, the seed latex being formed in a batch emulsion polymerization process which comprises:

(1) adding a first monomer charge to an aqueous emulsion polymerization medium, the first monomer charge comprising from 3 to 8 weight percent of a principal mixture of monomers, comprising from 86 to 92 mole percent vinylidene chloride and from 14 to about 8 mole percent of a comonomer mixture of

2

methyl methacrylate and a comonomer selected from the group consisting of acrylonitrile, methacrylic acid and methacrylonitrile, said comonomer mixture haivng a molar ratio of the comonomer to methyl methacrylate of from 0.2:1 to 5:1, the polymerization medium comprising water, an emulsifier and from 0.5 to 1.0 weight percent itaconic acid based on the principal mixture of monomers;

(2) adding a polymerization initiator to said emulsion polymerization medium, at a generally constant rate;

(3) continuing seed latex formation under autogenous pressure until a pressure drop in vapor pressure of monomers in the polymerization medium of from 12.4 to 15.2 kPa occurs;

(B) continuing polymerization under autogenous pressure by adding to the emulsion polymerization medium:

(1) a second monomer charge in an amount between 85 and 92 weight percent of the principal mixture of monomers as in (A)(1), said second monomer charge being added at a constant rate, the rate being sufficient to continually provide an excess of unreacted monomers in the polymerization medium, said excess being from 2 to 10 weight percent based on weight of the polymerization medium; and

(2) the polymerization initiator at the same constant rate of addition as in (A)(2); and

(C) following addition of all of the second monomer charge, finishing polymerization in a predetermined time interval T, the time interval T having at least a first portion and a second portion, by:

(1) continuing to add the polymerization initiator at the same constant rate of addition as in (A)(2) and (B)(2), the initiator being added throughout the time interval T; and

(2) adding a third monomer charge in an amount between 2 and 12 weight percent of the principal mixture of monomers as in (A)(1) said third monomer charge being added over the first portion of the time interval T in such a manner that the vapor pressure of monomers in the emulsion polymerization medium is reduced smoothly as reflected by a time-pressure curve wherein time is plotted on the abscissa and pressure is plotted on the ordinate, the time-pressure curve being generally free of discontinuities from the beginning of the time interval T to the end thereof and having a shape, the shape being that of a line which is concave downward.

The expression "a principal mixture of monomers" used in the above polymerization process means "the total of the monomer mixture used throughout the whole polymerization process (TMMWP).

Also within the scope of the present invention are the polymers prepared in accordance with this process. Included is a crystalline, controlled composition interpolymer having polymerized therein (a) from 86 to 92 mole percent vinylidene chloride; (b) from 14 to 8 mole percent of a comonomer mixture of methyl methacrylate and a comonomer selected from the group consisting of acrylonitrile, methacrylic acid and methacrylonitrile, said comonomer mixture having a molar ratio of the comonomer to methyl methacrylate of from 0.2:1 to 5:1 preferably from 0.5:1 to 2:1; and (c) from 0.5 to 1.0 weight percent itaconic acid based on weight of (a) plus (b); said interpolymer having a relative viscosity of from 1.3 to 1.7 at 25°C as a 1 percent solution in tetrahydrofuran; said interpolymer being capable of forming haze-free solutions when present in an amount of 20 percent solids in a solvent mixture as measured in terms of at least 80 percent transmission of the solution using an ultraviolet spectrophotometer operating at a wavelength of 640 nanometers against a reference of pure solvent mixture after aging the solution at 25°C for a period of 24 hours, said solvent mixture comprising 65 weight percent tetrahydrofuran and 35 weight percent toluene, based on solvent mixture weight.

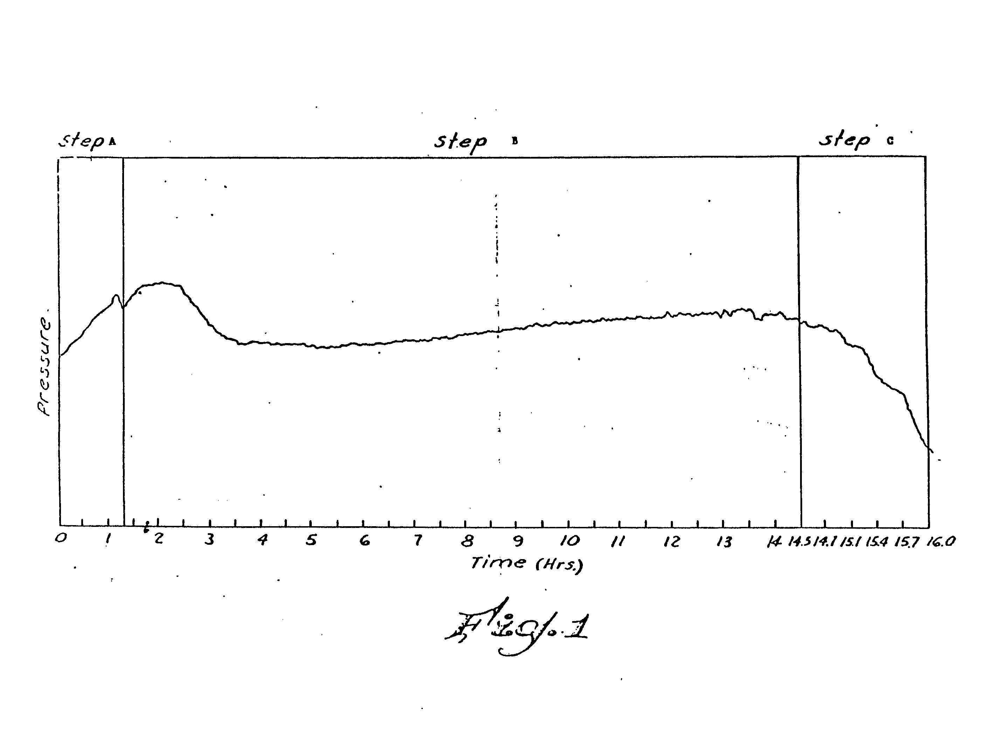

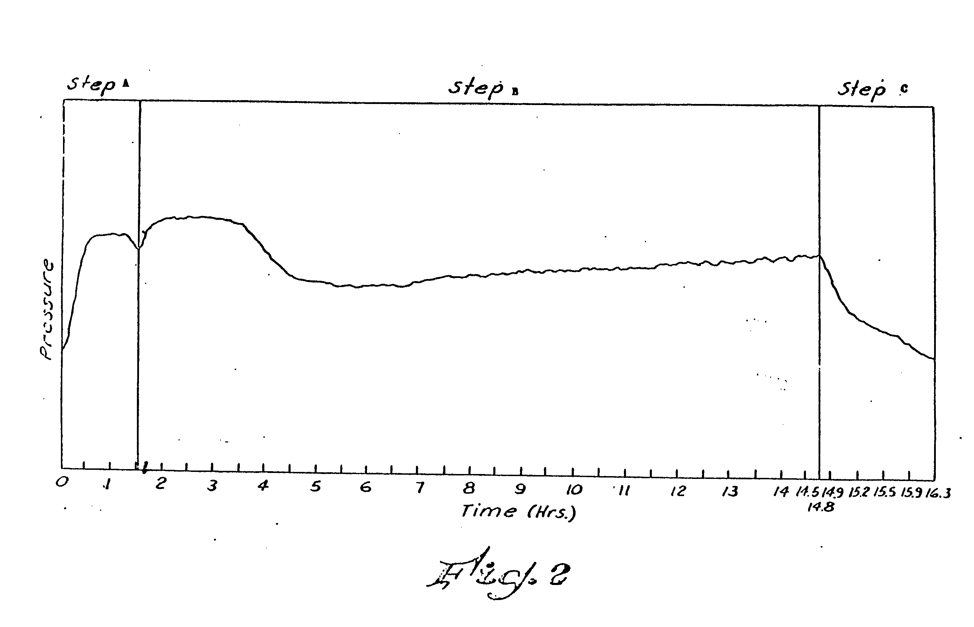

Figures 1 and 2 are time-pressure curves showing vapor pressure of monomers in the reactor as a function of time. Figure 1 is a partial reproduction of a chart of pressure transducer readings taken during the polymerization of monomers in Example 1. Experiment A. Figure 2 is a partial reproduction of a chart of pressure transducer readings taken during the polymerization of monomers in Example 2, Experiment D.

In Figures 1 and 2, the vertical axis represents pressure and the horizontal axis reflects time in hours. The horizontal axis in Figures 1 and 2 is not a straight linear progression but contains a portion where the time scale is expanded. Steps I, II and III of the polymerization processes are so labeled on Figures 1 and 2. The charts of pressure transducer readings of Figures 1 and 2 are generally smooth lines. The lines do, however, contain minor variations which result in a "sawtooth" appearance normal for polymerization apparatus wherein there is a time lag between a temperature increase and a response by a cooling medium control.

The monomers are polymerized using a three step aqueous emulsion process. Step (A) focuses on the formation of a seed latex. A first monomer charge of from 3 to 8 weight percent of a principal mixture of monomers is added during Step (A). The principal mixture of monomers comprises from 86 to 92 mole percent vinylidene chloride, and from 14 to 8 mole percent of a comonomer mixture of methyl methacrylate and a comonomer selected from the group consisting of acrylonitrile, methacrylic acid and methacrylonitrile. The comonomer mixture has a molar ratio of the comonomer to methyl methacrylate of from 0.2:1 to 5:1. Step (B) focuses on the simultaneous and continuous addition of monomers. A second monomer charge of from 85 to 92 weight percent of the principal mixture of monomers is added during Step (B). A portion of the principal mixture of monomers must remain after the Steps (A) and (B) to be added as a third monomer charge. Step (C) focuses on finishing polymerization. The third monomer charge, from 2 to 12 weight percent of the principal mixture of monomers, is added according to a specific monomer feeding schedule. The schedule calls for the third monomer charge to be added in at least two incremental steps. A polymerization initiator is added at a generally constant rate throughout all three steps.

Step (A) is essentially a small batch polymerization. In a batch polymerization, polymer composition is likely to vary because of unequal reactivity ratios among the monomers. Therefore, it is essential that Step (B) be started as soon as the seed latex shows signs of polymer composition variation as indicated by a pressure drop in the polymerization apparatus. The pressure drop is a drop in vapor pressure of monomers in the reaction mixture. If the transition from Step (A) to Step (B) is late, e.g., after a pressure drop of more than 12.4 to 15.2 kPa enough polymer composition change may occur to produce an unsatisfactory interpolymer which is insoluble or yields solutions having an unsatisfactory haze value.

With regard to Step (B), prior known processes for preparing interpolymers of this type (e.g., the process of U.S. Patent 3,879,359) require that the monomers be added to the polymerization reaction medium, in the proper ratios, as fast as they are polymerized. As such, there is generally very little excess monomer present at any time within the polymerization medium to prevent polymer composition change and a resultant loss in WVTR and solubility characteristics. In another process, the monomers must be added in two stages during the second step. In a first stage, the monomers must be added at a rate sufficient to continually provide an excess of monomers in the polymerization medium. In a second stage, remaining monomers must be added at a rate sufficient to continually ensure an absence of excess monomers in the polymerization medium. The latter process is disclosed as being critical for providing coatings having adequate flexibility.

It has now been unexpectedly found that interpolymers having the combination of properties required by the present invention are formed when from 85 to 92 percent of the total monomeric materials, excluding the itaconic acid, is added in a generally constant ratio and rate throughout Step (B). The rate must be sufficient to provide an excess of unreacted monomers in the polymerization medium of 1 to 10 weight percent based on weight of the polymerization medium. The amount of unreacted monomer is generally greatest near the beginning of Step (B) and least near the end of Step (B).

With regard to Step (C), the process of U.S. Patent 3,879,359 requires that the polymerization reaction be continued after all monomers have been added until about a 50 percent drop in reaction pressure occurs. Immediately thereafter the reaction medium must be cooled and the unreacted monomer removed to control copolymer composition change in a batch system. Such a process provided minimum WVTR and maximum resin solubility when properly carried out. A second process requires the further addition of an ethylenically unsaturated comonomer and a polymerization initiator to prevent undesirable interpolymer composition change.

It has now been unexpectedly found that interpolymers having the combination of properties required by the present invention are formed when a portion of the principal mixture of monomers is added during Step (C). The portion is from two to twelve weight percent based on the principal mixture of monomers.

Also, by incrementally reducing the rate of monomer addition of the third monomer charge from the rate of monomer addition during Step (B) in at least two incremental steps while maintaining the rate of initiator addition, the vapor pressure of monomers in the free space decreases gradually. The resulting interpolymer produced by incrementally reducing the rate of monomer addition during Step (C) is surprisingly soluble when compared to an interpolymer of generally identical composition prepared in the same manner except that monomer addition is stopped at the end of Step (B).

A time-pressure curve representing the polymerization wherein monomer addition is stopped at the end of Step (B) has a characteristic Step (C) shape shown in Figure 2 that is generally concave upward when pressure is plotted on the ordinate and time is plotted on the abscissa. By way of contrast, a time-pressure curve for Step (C) when monomer addition is incrementally reduced is generally concave downward when pressure is plotted on the ordinate and time is plotted on the abscissa as shown in Figure 1.

Step (C) continues for a time interval T which varies in accordance with (1) the interpolymer which is being polymerized and (2) the amount and ratio of mixed monomers remaining at the end of the second step. Particularly desirable results have been obtained with a time interval T of about $1\frac{1}{2}$ hours. Persons skilled in the art will recognize that satisfactory results are obtained when the time interval T is other than $1\frac{1}{2}$ hours. As such, the time interval of $1\frac{1}{2}$ hours is not to be taken by way of limitation.

It has been found that suitable results are obtained when two incremental steps are used to reduce the rate of monomer addition during Step (C) from that of Step (B). In the first incremental step, a first reduced rate of addition is maintained for a first fractional part of the time interval T. The first reduced rate of addition must be less than the rate of monomer addition during the second step, or Step (B). In the second incremental step, a second reduced rate of addition is maintained for a second fractional part of the time interval T. The second reduced rate of addition must be less than the first reduced rate of addition.

More than two incremental reductions in the rate of monomer addition from the rate of monomer addition during Step (B) may be made. Particularly, beneficial results are obtained when the time interval T also has a third fractional part wherein only the polymerization initiator is added to the polymerization medium. Desirable results are obtained when: (1) the first fractional part of the time interval T is about T/6; (2) the second fractional part of the time interval T is about T/3; (3) the third fractional part of the time interval T is about T/2; (4) the first reduced rate of addition is about one-half the rate of monomer addition of Step B; and (5) the second reduced rate of addition is about one-fourth the rate of monomer addition of Step (B).

The three step process is necessary to provide satisfactory interpolymers in accordance with the present invention. Interpolymers having the same general composition as those of the present invention but which are produced without adding a portion of the principal mixture of monomers during Step (C) are unsatisfactory for purposes of the present invention because of poor solubility or excessive haze arising it is believed from the formation of too much high vinylidene chloride content interpolymer during Step (C). Similar interpolymers containing from 86 to 92 mole percent vinylidene chloride may also be produced by a conventional batch emulsion polymerization with all of the monomers added at the start of polymerization but are generally not sufficiently soluble in low cost solvents to provide useful coatings for substrates such as cellophane.

It is recognized that each of the monomeric materials polymerized to form the interpolymers of the present invention has a characteristic reactivity ratio with respect to each of the other monomeric materials. Such characteristic reactivity ratios are well known in the art. In general, methyl methacrylate and the comonomer which is selected from the group consisting of acrylonitrile, methacrylic acid and methacrylonitrile both enter the interpolymer faster than vinylidene chloride while itaconic acid enters slower. Accordingly, the present invention requires that all of the itaconic acid be added during Step (A) rather than added in the same manner as the primary mixture of monomers.

Because of the differing reactivity ratios, it is believed that the vinylidene chloride content of the interpolymer increases as the emulsion polymerization proceeds toward completion. At some point as the vinylidene chloride content of the interpolymer increases, the interpolymer ceases to be soluble in a given solvent system such as a mixture of tetrahydrofuran and toluene in a weight ratio of 65/35. Insolubility of an interpolymer which initially dissolves in a solvent system, is manifest as crystallization which causes the solution to be hazy. The onset of insolubility varies with solvent strength. There will be, however, a threshold level at which solutions of the interpolymer are not stable. This threshold may be called the "haze threshold".

Beneficially, the interpolymers prepared by the present invention do not develop hazy solutions upon standing for 24 hours at 25° Centigrade (°C) after dissolving for a period of about 30 minutes in a solvent system which is maintained at a temperature of about 30°C. Desirably, the interpolymers prepared in accordance with the present invention are capable of forming generally haze-free solutions when present in an amount of from about 5 to 20 weight percent solids based on weight of solids plus solvent. The solvent system is desirably a blend of tetrahydrofuran and toluene in a weight ratio of tetrahydrofuran to toluene of 65/35. Such generally haze-free solutions desirably have a haze value of at least 80 percent transmission. Haze values are measured in terms of percent transmission of visible light of the solution, after the solution has been aged for a period of 24 hours at a temperature of 25°C, against a reference of the solvent system. Haze values may be obtained by using an ultraviolet spectrophotometer operating at a wavelength of 460 nanometers. Preferably, such generally haze-free solutions have a haze value of at least 85 percent transmission.

The interpolymers prepared in accordance with the present invention beneficially have a relative viscosity of from 1.3 to 1.7 at 25°C as a 1 percent solution in tetrahydrofuran. Said interpolymers beneficially have the following properties when deposited as a coating with a coating weight of 4 grams per square meter: (a) a minimum heat seal temperature of from 70°C to 140°C; (b) a water vapor transmission rate of no greater than 3.9 grams/m²/24 hours at 38°C; (c) an oxygen transmission rate of no greater than 4.6 cubic centimeters of oxygen/m²/24 hours/1 atmosphere of oxygen at 25°C; (d) a crystallization ratio at 15 minutes at 80°C of from about 0.5 to about 2. The interpolymers desirably have a minimum heat seal temperature of from 95°C to 130°C when deposited as a coating with a coating weight of 4 grams per square meter.

The interpolymers of the present invention are prepared desirably from a principal mixture of monomers and itaconic acid. The principal mixture of monomers comprises from 86 to 92 mole percent vinylidene chloride and from 14 to 8 mole percent of a comonomer mixture of methyl methacrylate and a comonomer selected from the group consisting of acrylonitrile, methacrylic acid and methacrylonitrile. The amount of itaconic acid is from 0.5 to 1.0 weight percent based on the principal mixture of monomers. The comonomer mixture has a molar ratio of methacrylic acid to methyl methacrylate of from 0.2:1 to 5:1. Interpolymers containing less than 0.5 weight percent itaconic acid provide inadequate coating adhesion when the interpolymer is applied as a lacquer coating to a substrate such as cellophane. Amounts of itaconic acid in excess of about 1.0 weight percent based on the primary mixture of monomers may be used. However, such amounts are not required for sufficient adhesion and are accordingly uneconomical.

It has been found that in a short time during Step II, the amount of unreacted monomers in the polymerization medium drops rapidly from a high level of about 10 weight percent based on weight of the polymerization medium to a low level of about 1 to 2 weight percent. The short time interval will be referred to as the shift interval. Placement of the shift interval within Step II depends upon a number of factors. Such factors include: (1) amount of latex solids; (2) desired interpolymer molecular weight; and (3) desired interpolymer solution viscosity. Desirably, the amount of latex solids to be produced is in the range of from about 50 to 56 weight percent based on weight of the latex.

The polymerization time measured from the beginning of Step (A) to the end of Step (C) is desirably about 5 to 20 hours. Polymerization intervals of less than about 5 hours may be used but may require the use of complex cooling apparatus. Polymerization times of more than about 20 hours are possible but usually uneconomical.

In Step (A), the emulsion polymerization medium is beneficially heated to a temperature of 30° to 80°C, preferably about 50° to 60°C, and most preferably 50°C. In Steps (B) and (C), polymerization is respectively continued and finished at a temperature beneficially within the range of from 30° to 80°C and desirably, from about 50° to 60°C. Particularly, beneficial results are obtained when polymerization temperatures are maintained within a tolerance of ±0.5°C.

These temperature limitations for each of the three steps of the process are important. If the shift interval occurs too early during Step (B), an interpolymer which is too soluble will be produced. That is, the interpolymer will not crystallize. If the shift interval occurs too late during Step (B) an interpolymer which is generally insoluble will be produced. A desirable time interval for Step (B) is about 5 to 15 hours.

Conventional amounts and types of emulsifiers and other additives may be used in preparing the interpolymers of the present invention. Such emulsifiers and other additives must not interfere with, or significantly alter, the reaction mechanism or the final interpolymer prescribed herein. Also, small amounts of other monomeric materials may be added before, during, or after the prescribed polymerization reaction. Such additives and other monomers must not significantly alter the reaction mechanism or the final interpolymer prescribed herein.

Conventional amounts of reduction-oxidation (hereinafter "redox") initiators may be used in preparing the interpolymers of the present invention. A preferred redox initiator is t-butyl hydroperoxide/sodium formaldehyde sulfoxylate mixture wherein the sodium formaldehyde sulfoxylate is generally added in excess. The amount of initiator used varies over a broad range and depends largely upon the type and concentration of the initiator as well as the desired interpolymer molecular weight. As noted above, the emulsion polymerization initiator is desirably added at a generally constant rate throughout the emulsion polymerization sufficient to produce interpolymers in accordance with the present invention.

The following examples, wherein all parts and percentages are by weight unless otherwise stated illustrate the present invention.

Example 1

A. Preparation of vinylidene chloride (VDC)/methyl methacrylate (MMA)/methacrylic acid (MAA)/itaconic acid (IA) interpolymer according to the present invention

A VDC/MMA/MMA/IA interpolymer was prepared by emulsion polymerization in a 3-liter glass pipe reactor equipped with an agitator and metering pumps.

Step (A)—Initiating polymerization

The initial water phase charged to the reactor was as follows:

1425 grams of deionized water

18 grams emulsifier (80% active) (a dihexyl ester of sodium sulfo-succinic acid commercially available under the designation Aerosol MA (Registered Trade Mark) from American Cyanamid Company.

13 grams itaconic acid (0.70 weight% based on the total weight of the VDC/MMA/MAA monomer mixture added during polymerization)

The initial water phase was added to the reactor. The reactor was then evacuated, purged with gaseous nitrogen and evacuated a second time.

A monomer mixture comprising the following ingredients was prepared:

1898 grams (90 mole%) VDC

109 grams (5 mole%) MMA

92 grams (5 mole%) MAA

An oxidizing solution was prepared by diluting 11.1 grams of 7 percent t-butyl hydroperoxide (TBHP) to 500 grams with deionized water. A reducing solution was similarly prepared by diluting 4.1 grams of sodium formaldehyde sulfoxylate to 500 grams with deionized water.

Following the second evacuation of the reactor, the reactor was heated to a temperature of about 55°C while stirring at a rate of about 250 revolutions per minute (rpm). The rate of stirring was maintained at about 250 rpm throughout all three steps. About 73 grams of the monomer mixture was then pumped into the reactor as rapidly as possible. Addition of the oxidizing and reducing solutions was then started. The oxidizing and reducing solutions were each added by pumping, through separate pumps, at a rate of about 10 grams per hour. As such, the oxidizing and reducing solutions were mixed in the reactor. The seed latex reaction was allowed to proceed until there was a drop in pressure from the maximum pressure attained during Step A of about 13.8 kPa. Step (A) lasted for an interval, beginning with addition of the oxidizing and reducing solutions and ending with the drop in pressure of about 13.8 kPa, of about one hour.

Step II—Continuous addition

Generally, immediately following the pressure drop, addition of the monomer mixture was started at a rate of about 130 grams per hour. The 130 gram per hour rate of addition was maintained for about 13¼ hours. As such, a total of about 1722 grams of the monomer mixture was added during Step (B). Addition of the oxidizing and reducing solutions, each at a rate of about 10 grams per hour, was continued throughout Step (B).

6

Step C—Finishing

Generally, immediately following completion of monomer mixture addition in Step (B) finishing was started. In Step (C), the monomer mixture was added in accordance with the following schedule:

(1) addition of monomer mixture at a rate of about 65 grams/hour for $\frac{1}{4}$ hour; and

(2) Addition of monomer mixture at a rate of about 32 grams/hour for $\frac{1}{2}$ hour. Addition of the oxidizing and reducing solutions, each at a rate of about 10 grams per hour, was continued throughout Step (C), Step (C) lasted for an additional 3/4 hour after completion of monomer mixture addition. As such, Step (C) lasted for about $1\frac{1}{2}$ hours.

At the end of Step (C) addition of the oxidizing and reducing solutions was stopped. The reactor was then cooled to ambient temperature. The latex was then recovered as detailed below.

B. Recovery of the polymer from the latex

The interpolymer was recovered from the latex by coagulation in calcium chloride ($CaCl_2$). 35 Cubic centimeters (cc) of a 32% $CaCl_2$ solution were added to 1000 cc of water to form a solution. The solution was then heated to a temperature of about 40°C. Thereafter 200 cc of the latex produced in (A) above were added to the mixture with stirring at a rate of about 250 rpm. An additional amount of 1000 cc of water was then added to the mixture. The mixture was then slowly heated to a temperature of about 80°C and held at that temperature for about 2 hours while continuing stirring at a rate of about 250 rpm. The slurry was then quenched with ice. The polymer was collected and washed with a spray of water for 10 minutes in a centrifuge. The interpolymer was then dried to a powder form containing less than about 2% water. The interpolymer was then ready for evaluation.

C. Test for solubility of the interpolymer (haze stability)

The haze or tubidity of 19.5 percent interpolymer solids in a 65/35 weight ratio tetrahydrofuran/toluene (THF/Tol) solvent mixture was measured using a Beckman Model 25 Ultraviolet Spectrophotometer at a wavelength of 640 nanometers (nm). Haze values are reported as percent transmission. The lower the transmission value, the more turbid or hazy the solution.

D. Testing coating performance

1. Preparation of coated film

Coating tests were conducted on an oriented polyester film. The film was coated with a 19.5 percent interpolymer solids lacquer solution using a 65/35 weight ratio THF/Tol mixture as the solvent. The coating weight was about 4 grams/square meter. The coated film was aged for 16 hours at a temperature of 60°C to ensure development of crystallinity before testing the coating.

2. Measuring permeability to water vapor

Permeability to water vapor (WVTR) was measured using an infrared diffusometer, commercially available from Reigel-Mocon Modern Controls under the designation Model IRD-2. The data are reported as grams of water per square meter per 24 hours at 38°C for a coating weight of 4 grams per square meter.

3. Testing for minimum heat seal temperature

A Robot automatic controlled, air operated jaw sealer was used for making seals so that minimum heat seal temperature (MHST) could be measured. Heat seals were made at 5 degree intervals between 95°C and 135°C using 138 kPa jaw pressure and dwell time of 1 second. The MHST is the temperature at which coating deformation is first observed when the seal is torn apart.

4. Measuring permeability to oxygen

Permeability to oxygen ($O_2$TR) was measured using an oxygen diffusometer commercially available from Riegel-Mocon Modern Controls under the designation Oxtran Model 1050. The data are reported as cubic centimeters (cc) of oxygen per square meter per 24 hours per one atmosphere of oxygen at 25°C for the coating weight of 4 grams per square meter.

5. Determining the crystallization ratio at 15 minutes at 80°C

A 15 percent solution of the interpolymer in a solvent mixture of tetrahydrofuran and toluene (THF/Tol) in a respective weight ratio of 65/35 was prepared by stirring the interpolymer in the solvent mixture for 30 minutes at 30°C. Crystallization of a coating prepared from the solution was monitored by casting a film from the solution onto a 12.7 micrometer tetrafluoroethylene film directly in the beam of a recording infrared spectrophotometer using a coating apparatus generally identical to that described in U.S. Patent 3,220,378. The spectrophotometer was a Beckman Model 4240 commercially available from Beckman Instruments, Inc. The coated film was maintained at a temperature of about 80°C throughout the procedure described herein. An infrared absorption band of 1045 $cm^{-1}$ is characteristic of crystalline vinylidene chloride interpolymers. Intensity of the 1045 $cm^{-1}$ absorption band was monitored with time to yield a crystallization rate curve and a value for change in optical density at 1045 $cm^{-1}$. The change in optical density at 1045 $cm^{-1}$ as a result of crystallization is divided by a correction factor. The correction factor is the difference between an optical density value for the coated film at 1410 $cm^{-1}$ and an optical density value for the coated film at 1520 cm⁻¹. The correction factor is an approximate correction factor for coating thickness. Data reported in Tables I and II was thus determined in accordance with the following formula:

$$\text{Crystallization ratio at 15 minutes at } 80°C = \frac{\text{Optical density at } 1045 \text{ cm}^{-1} \text{ at } 15 \text{ minutes–Optical density at } 1045 \text{ cm}^{-1} \text{ at } 0 \text{ minutes}}{\text{Optical density at } 1410 \text{ cm}^{-1}\text{–} \text{Optical density at } 1520 \text{ cm}^{-1}}$$

6. Measuring relative viscosity of the interpolymer

Relative viscosity of the interpolymer was determined by using an Oswald viscosimeter. A one percent interpolymer solution was prepared by dissolving about 1/2 gram of the interpolymer in 50 milliliters of tetrahydrofuran. The one percent solution was compared to a pure sample of tetrahydrofuran in a manner wellknown in the art to determine a relative viscosity.

The following Table I sets forth the composition of the interpolymer, the relative viscosity thereof, the haze stability thereof and the minimum heat seal temperature, the WVTR, the O₂TR and the crystallization ratio at 15 minutes at 80°C of coatings prepared therefrom. For purposes of identification, the interpolymer prepared by the process detailed in part A of Example 1 is hereinafter identified as Experiment A. Two additional interpolymers were prepared and tested in generally the same manner as Experiment A. These interpolymers are identified in Table I as Experiments B and C.

TABLE I

| Experiment No. | Composition—Mole % | | | Wt% IA* | Relative viscosity | MHST °C | WBTR | O₂TR |
|---|---|---|---|---|---|---|---|---|
| | VDC | MMA | MAA | | | | | |
| A** | 90 | 5 | 5 | 0.7 | 1.43 | 120 | 1.71 | 3.26 |
| B** | 90 | 7 | 3 | 0.7 | 1.40 | 120 | 2.01 | 2.79 |
| C** | 90 | 6 | 4 | 0.7 | 1.46 | 120 | 1.71 | 2.48 |

TABLE I Continued

| Experiment No. | Solution haze stability as % light transmission | | Crystallization ratio at 15 minutes at 80°C |
|---|---|---|---|
| | Initial | 24 Hours | |
| A** | 95 | 86 | 1.17 |
| B** | 98 | 87 | 1.28 |
| C** | 95 | 80 | 1.20 |

VDC=vinylidene chloride
MAA=methacrylic acid
MMA=methyl methacrylate
IA=itaconic acid

* The amount of itaconic acid is expressed in terms of weight percent based on combined weight by vinylidene chloride, methyl methacrylate and methacrylic acid.

MHST=Minimum heat seal temperature
WVTR=Water vapor transmission rate; grams of water/square meter/24 hours at 38°C; coating weight of 4 grams per square meter
O₂TR =Oxygen transmission rate; cubic centimeters of oxygen/square meter/24 hours/one atmosphere of oxygen at 25°C; coating weight of 4 grams per square meter.

** Illustrative of the present invention.

Example 2

Comparative vinylidene chloride (VDC)/methyl methacrylate (MMA)/methacrylic acid (MAA)/itaconic acid (IA) interpolymers

In each of a series of additional experiments, comparative vinylidene chloride/methyl methacrylate/methacrylic acid/itaconic acid interpolymers were prepared as per Experiment No. A of Example 1, except that monomer feed during Step (B) was for $13\frac{1}{2}$ hours instead of $13\frac{1}{4}$ hours and monomer feeding during Step III was eliminated. Addition of the oxidizing and reducing solutions, each at a rate of 10 grams per hour, was continued throughout Steps I—III as in Example I. Step (C) lasted for $1\frac{1}{2}$ hours as in Example 1.

The following Table II sets forth the composition of the interpolymer, the relative viscosity and haze stability thereof, and the minimum heat seal temperature (MHST), the $O_2TR$, the WVTR, and the crystallization ratio at 15 minutes at 80°C of coatings prepared therefrom. For purposes of identification the interpolymers prepared in accordance with Example 2 as detailed above are hereinafter identified as Experiments D, E, and F.

TABLE II

| Experiment No. | Composition—Mole % | | | Wt% IA* | Relative viscosity | MHST °C | WVTR | $O_2TR$ |
|---|---|---|---|---|---|---|---|---|
| | VDC | MMA | MAA | | | | | |
| D | 90 | 5 | 5 | 0.7 | 1.40 | 120 | 1.71 | 2.95 |
| E | 90 | 7 | 3 | 0.7 | 1.58 | 120 | 2.48 | 2.79 |
| F | 90 | 6 | 4 | 0.7 | 1.56 | 120 | 2.01 | 2.64 |

TABLE II Continued

| Experiment No. | Solution haze stability as % light transmission | | Crystallization ratio at 15 minutes at 80°C |
|---|---|---|---|
| | Initial | 24 Hours | |
| D | 84 | 40 | 1.02 |
| E | 88 | 50 | 1.08 |
| F | 95 | 50 | 1.28 |

VDC=vinylidene chloride
MAA=methacrylic acid
MMA=methyl methacrylate
IA=itaconic acid

* The amount of itaconic acid is expressed in terms of weight percent based on combined weight of vinylidene chloride, methyl methacrylate and methacrylic acid.

MHST=Minimum heat seal temperature
WVTR=Water vapor transmission rate; grams of water/square meter/24 hours at 38°C; coating weight of 4 grams per square meter
$O_2TR$ =Oxygen transmission rate; cubic centimeters of oxygen/square meter/24 hours/one atmosphere of oxygen at 25°C; coating weight of 4 grams per square meter.

Example 3

Additional experiments in which interpolymer composition is varied

In a series of additional experiments, vinylidene chloride interpolymers containing either varying amounts of methacrylic acid or a comonomer other than methacrylic acid were prepared. The interpolymers were prepared either as per Experiment No. A of Example 1 (Process No. 1) or as per Experiment No. D of Example 2 (Process No. 2). The following Table III sets forth the composition of the interpolymer, the relative viscosity and haze stability thereof, and the minimum heat seal temperature (MHST), $O_2TR$, the WVTR and the crystallization ratio at 15 minutes at 80°C of coatings prepared therefrom. For purposes of identification, the interpolymers prepared in accordance with this example are hereinafter identified as Experiments G, H, I, J, K, L, M and N.

TABLE III

| Experiment No. | Composition—Mole % | | | | | Wt% IA* | Relative Viscosity | MHST °C |
|---|---|---|---|---|---|---|---|---|
| | VDC | MMA | MAA | VCN | MAN | | | |
| G | 89.4 | 4.7 | | 5.9 | | 0.7 | 1.48 | 125 |
| H** | 89.4 | 4.7 | | 5.9 | | 0.7 | 1.47 | 110 |
| I | 89 | 3 | | | 8 | 0.7 | 1.40 | 130 |
| J** | 89 | 3 | | | 8 | 0.7 | 1.40 | 130 |
| K | 90 | 5 | 5 | | | 0.7 | 1.40 | 120 |
| L** | 90 | 5 | 5 | | | 0.7 | 1.43 | 120 |
| M | 86 | 9 | 5 | | | 0.7 | 1.68 | 120 |
| N** | 86 | 9 | 5 | | | 0.7 | 1.7 | 120 |

TABLE III Continued

| Experiment No. | Solution haze stability as % light transmission | | Crystallization ratio at 15 minutes at 80°C | Process No. |
|---|---|---|---|---|
| | Initial | 24 Hours | | |
| G | 91 | 30 | 2.0 | 2 |
| H** | 95 | 95 | 1.9 | 1 |
| I | 90 | 36 | 1.6 | 2 |
| J** | 98 | 83 | 1.5 | 1 |
| K | 84 | 40 | 1.1 | 2 |
| L** | 95 | 86 | 1.2 | 1 |
| M | 96 | 74 | 0.9 | 2 |
| N** | 98 | 86 | 0.7 | 1 |

VDC=vinylidene chloride;
VCN=acrylonitrile;
MAA=methacrylic acid;
MAN=methacrylonitrile;
MMA=methyl methacrylate;
IA=itaconic acid

\* The amount of itaconic acid is expressed in terms of weight percent based on combined weight of monomers other than itaconic acid which are polymerized into the interpolymer.

\*\* Illustrative of the present invention (Process No. 1); other experiments by Process No. 2.

MHST=Minimum heat seal temperature; WVTR=Water vapor transmission rate; grams of water/square meter/24 hours at 38°C with a coating weight of 4 grams per square meter; $O_2$TR=Oxygen transmission ratio: cubic centimeters of oxygen/square meter/24 hours/one atmosphere of oxygen at 25°C with a coating weight of 4 grams per square meter.

A comparison of the data contained in Tables I, II and III clearly demonstrates that interpolymers prepared in accordance with the present invention (Examples A, B, C, H, J, L and N) have much better haze stability than the interpolymers prepared without following a reduced monomer feeding schedule (Examples D, E, F, G, I, K and M).

**Claims**

1. A process for preparing, in aqueous emulsion, controlled interpolymer compositions having polymerized therein (a) from 86 to 92 mole percent vinylidene chloride; (b) from 14 to 8 mole percent of a mixture of methyl methacrylate and a comonomer selected from the group consisting of acrylonitrile, methacrylic acid, and methacrylonitrile, said mixture of methyl methacrylate and the comonomer having a molar ratio of the comonomer to methyl methacrylate of from 0.2:1 to 5:1; and (c) from 0.5 to 1.0 weight percent itaconic acid based on weight of (a) plus (b); said interpolymer compositions having a relative viscosity of from 1.3 to 1.7 at 25°C as a 1 percent solution in tetrahydrofuran; said interpolymer compositions being capable of forming generally haze-free solutions when present in an amount of 20 percent solids in a solvent mixture, comprising 65 weight percent tetrahydrofuran and 35 weight percent toluene based on solvent mixture weight, characterized by the sequential steps of:

(A) initiating emulsion polymerization by forming a seed latex, the seed latex being formed in a batch emulsion polymerization process which comprises:

(1) adding a first monomer charge to an aqueous emulsion polymerization medium, the first monomer charge comprising from 3 to 8 weight percent of the total of the monomer mixture used throughout the whole process (TMMWP), comprising from 86 to 92 mole percent vinyl chloride and from 14 to 8 mole percent of a comonomer mixture of methyl methacrylate and a comonomer selected from the group consisting of acrylonitrile, methacrylic acid, and methacrylonitrile, said comonomer mixture having a molar ratio of the comonomer to methyl methacrylate of from 0.2:1 to 5:1, the polymerization medium comprising water, an emulsifier and from 0.5 to 1.0 weight percent itaconic acid based on the principal mixture of monomers;

(2) adding a polymerization initiator to said emulsion polymerization medium at a generally constant rate;

(3) continuing seed latex formation under autogenous pressure until a pressure drop in vapor pressure of monomers in the polymerization medium of from 12.4 to 15.2 kPa occurs;

(B) continuing polymerization under autogenous pressure by adding to the emulsion polymerization medium:

(1) a second monomer charge in an amount between 85 and 94.25 weight percent of the total of the monomer mixture (TMMWP) as in (A)(1), said second monomer charge being added at a generally constant rate, the rate being sufficient to continually provide an excess of unreacted monomers in the polymerization medium, said excess being from 2 to 10 weight percent based on weight of the polymerization medium; and

(2) the polymerization initiator at the same constant rate of addition as in (A)(2); and

(C) following addition of all of the second monomer charge, finishing polymerization in a predetermined time interval T, the time interval T having at least a first portion and a second portion, by:

(1) continuing to add the polymerization initiator at the same constant rate of addition as in (A)(2) and (B)(2), the initiator being added throughout the time interval T; and

(2) adding a third monomer charge in an amount between 2 and 12 weight percent of the total of the monomer mixture (TMMWP), said third monomer charge being added over the first portion of the time interval T in such a manner that the vapor pressure of monomers in the emulsion polymerization medium is reduced smoothly as reflected by a time-pressure curve wherein time is plotted on the abscissa and pressure is plotted on the ordinate, the time-pressure curve being generally free of discontinuities from the beginning of the time interval T to the end thereof and having a shape, the shape being that of a line which is concave downward.

2. The process of Claim 1, wherein the mixture of monomers comprises about 90 mole percent vinylidene chloride and about 10 mole percent of the mixture of methacrylic acid and methyl methacrylate.

3. The process of Claim 1 wherein the third step (C) is immediately following addition of all of the second monomer charge, finishing polymerization in a predetermined time interval T, the time interval T having a first fractional part, a second fractional part and a third fractional part, by:

(1) continuing to add the polymerization initiator at generally the same constant rate of addition as in (A)(2) and (B)(2), the initiator being added throughout the time interval T; and

(2) adding a third monomer charge in an amount between about 1.76 and 12 weight percent of the total of the monomer mixture (TMMWP) said third monomer charge being added over the time interval T at the following sequential rates:

(a) about one-half the rate of addition of the second monomer charge as in (B)(1) for the first fractional part of the time interval T, the first fractional part being about T/6;

(b) about one-fourth the rate of addition of the second monomer charge as in (B)(1) for the second fractional part of the time interval T, the second fractional part being about T/3; and

(c) adding only the initiator during the third fractional part, the third fractional part being about T/2.

4. A crystalline, controlled composition interpolymer having polymerized therein (a) from 86 to 92 mole percent vinylidene chloride; (b) from 14 to 8 mole percent of a mixture of methyl methacrylate and a comonomer selected from the group consisting of acrylonitrile, methacrylic acid and methacrylonitrile, said mixture of methyl methacrylate and the comonomer having a molar ratio of the comonomer to methyl methacrylate of from 0.2:1 to 5:1; and (c) from 0.5 to 1.0 weight percent itaconic acid based on weight of (a) plus (b); said interpolymer having a relative viscosity of from 1.3 to 1.7 at 25°C as a 1 percent solution in tetrahydrofuran; said interpolymer having a haze value of at least 80 percent transmission of visible light at 640 nanometers when present in an amount of 20 percent solids in a solvent mixture comprising 65 weight percent tetrahydrofuran and 35 weight percent toluene based on solvent mixture weight.

5. The interpolymer according to Claim 4 also having a minimum heat-seal temperature of 70°C to 140°C, a water vapor transmission rate of no greater than 3.9 grams of water/square meter/24 hours at 38°C, an oxygen transmission rate of no greater than 4.6 cubic centimeter of oxygen/square meter/24 hours/one atmosphere of oxygen at 25°C, and a crystallization ratio at 15 minutes at 80°C of 0.5 to 2 when deposited as a coating from a tetrahydrofuran lacquer solution at a coating weight of 4 grams/square meter.

6. The interpolymer according to claim 4 or 5 wherein the generally haze-free solution has a haze value of at least 85 percent transmission of visible light at 640 nanometers.

7. Interpolymers according to claim 4, wherein said interpolymer has a minimum heat seal temperature of from 95°C to 130°C when deposited as a coating with a coating weight of 4 grams per square meter.

**Patentansprüche**

1. Verfahren zur Herstellung kontrollierter interpolymerer Zusammensetzungen in wässriger Emulsion mit hineinpolymerisierten (a) 86 bis 92 Mol-% Vinylidenchlorid, (b) 14 bis 8 Mol-% eines Gemischs aus Methylmethacrylat und einem Comonomer aus der Gruppe Acrylnitril, Methacrylsäure und Methacrylnitril, wobei das genannte Gemisch aus Methylmethacrylat und dem Comonomer ein Molverhältnis des Comonomers zum Methylmethacrylat zwischen 0,2:1 und 5:1 hat, und (c) zwischen 0,5 und 1,0 Gew.% Itaconsäure berechnet auf das Gewicht (a) plus (b); wobei die genannte Interpolymerzusammensetzung bei 25°C als 1%ige Losung in Tetrahydrofuran eine relative Viskosität zwischen 1,3 und 1,7 hat, wobei die genannte interpolymere Zusammensetzung in der Lage ist, im allgemeinen trübungsfreie Lösungen zu bilden wenn sie in einer Menge von 20% Feststoff in einem Lösungsgemisch enthaltend 65 Gew.% Tetrahydrofuran und 35 Gew.% Toluol berechnet auf das Gewicht des Gemischs anwesend ist, gekennzeichnet durch die aufeinanderfolgenden Schritte:

(A) Einleitung der Emulsionspolymerisierung durch Bildung eines Keimbildnerlatex, wobei dieser Keimbildnerlatex in einem Ansatzemulsionspolymerisationsprozeß gebildet wird, der besteht aus

(1) Zugabe einer ersten Monomercharge zu einem wäßrigen Emulsionspolymerisationsmedium, wobei die erste Monomercharge 3 bis 8 Gew.% berechnet auf das im ganzen Prozeß eingesetzte Gesamtmonomergemisch (Total of the Monomer Mixture used throughout the Whole Process—TMMWP) enthält, bestehend aus 86 bis 92 Mol-% Vinylchlorid und zwischen 14 und 8 Mol-% eines Comonomergemisches aus Methylmethacrylat und einem Comonomer aus der Gruppe Acrylnitril, Methacrylsäure und Methacrylnitril, wobei das genannte Comonomergemisch ein Molverhältnis Comonomer/Methylmethacrylat zwischen 0,2:1 und 5:1 hat, das Polymerisationsmedium Wasser, ein Emulgiermittel und zwischen 0,5 und 1,0 Gew.% Itaconsäure, berechnet auf das Monomer-Hauptgemisch enthält:

(2) Zugabe eines Polymerisierungs-Initiators zum genannten Emulsionspolymerisationsmedium mit einer im allgemeinen konstanten Rate,

(3) Fortsetzung der Keimbildnerlatexbildung unter autogenum Druck bis ein Abfall im Dampfdruck der Monomere im Polymerisationsmedium zwischen 12,4 und 15,2 kPa auftritt;

(B) Fortsetzung der Polymerisierung unter autogenum Druck durch Zugabe zum Polymerisationsmedium

(1) einer zweiten Monomercharge in einer Menge zwischen 85 und 94,25 Gew.% berechnet auf das Gesamtmonomergemisch (TMMWP) wie unter (A)(1), wobei die genannte zweite Monomercharge im allgemeinen mit konstanter Rate zugegeben wird und diese Rate ausreichend ist, um ständig einen Überschuß an nicht-reagierten Monomeren im Polymerisationsmedium zu erhalten, wobei dieser Überschuß zwischen 2 und 10 Gew.% berechnet auf das Gewicht des Polymerisationsmediums beträgt, und

(2) des Polymerisations-Initiators in der gleichen konstanten Rate wie unter (A)(2), und

(C) nach Zugabe der gesamten zweiten Monomercharge Beendigung der Polymerisation in einem vorbestimmten Zeitintervall T, wobei dieses Zeitintervall T wenigstens einen ersten Teil und einen zweiten Teil aufweist, durch

(1) Fortsetzung der Zugabe des Polymerisations-Initiators in der gleichen konstanten Zugaberate wie unter (A)(2) und (B)(2), wobei der Initiator durch das gesamte Zeitintervall T hindurch zugegeben wird; und

(2) Zugabe einer dritten Monomercharge in einer Menge zwischen 2 und 12 Gew.% berechnet auf das Gesamtmonomergemisch (TMMWP), wobei diese genannte dritte Monomercharge während des ersten Teils des Zeitintervalls T zugegeben wird und zwar so, daß der Dampfdruck der Monomere im Emulsionspolymerisationsmedium langsam reduziert wird, wie in einer Zeit/Druckkurve dargestellt ist, in der die Zeit in der Abszisse und der Druck in der Koordinate aufgetragen wird wobei die Zeit/Druckkurve von Anfang des Zeitintervalls T bis zu seinem Ende im allgemeinen frei von Diskontinuitäten ist und ihre Form einer nach unten konkaven Linie entspricht.

2. Verfahren gemäß Anspruch 1, in dem das Monomergemisch etwa 90 Mol-% Vinylidenchlorid und etwa 10 Mol-% des Gemischs aus Methacrylsäure und Methylmethacrylat enthält.

3. Verfahren gemäß Anspruch 1, in dem der dritte Schritt (c) unmittelbar auf die Zugabe der gesamten zweiten Monomercharge folgt, wobei die Polymerisierung in einem vorbestimmten Zeitintervall T beendet wird, und das Zeitintervall T einen ersten Abschnitt, einen zweiten Abschnitt und einen dritten Abschnitt umfaßt, durch:

(1) Weitere Zugaben des Polymerisations-Initiators im wesentlichen mit der gleichen Zugaberate wie unter (A)(2) und (B)(2), wobei der Initiator während des Zeitintervalls T zugegeben wird, und

(2) Zugabe einer dritten Monomercharge in einer Menge zwischen etwa 1,76 und 12 Gew.% berechnet auf das Gesamtmonomergemisch (TMMWP), wobei die genannte dritte Monomercharge während des Zeitintervalls T in die folgenden Raten aufgeteilt zugegeben wird:

(a) etwa die Halfte der Zugaberate der zweiten Monomercharge wie unter (B)(1) während des ersten Zeitabschnitts des Zeitintervalls T von etwa T/6;

(b) etwa ein Viertel der Zugaberate der zweiten Monomercharge wie unter (B)(1) während des zweiten Zeitabschnitts des Zeitintervalls T von etwa T/3,

(c) Zugabe ausschließlich des Initiators während des dritten Zeitabschnitts des Zeitintervalls T von etwa T/2.

4. Eine kristalline, kontrollierte, interpolymere Zusammensetzung, in der polymerisiert ist: (a) zwischen 86 und 92 Mol-% Vinylidenchlorid, (b) zwischen 14 und 8 Mol-% eines Gemischs aus Methylmethacrylat und einem Comonomer aus der Gruppe Acrylnitril, Methacrylsäure und Methacrylnitril, wobei das genannte Gemisch aus Methylmethacrylat und dem Comonomer ein Molverhältnis Comonomer/Methylmethacrylat zwischen 0,2:1 und 5:1 aufweist; und (c) zwischen 0,5 und 1,0 Gew.% Itaconsäure berechnet auf das Gewicht (a) plus (b), wobei das Interpolymer als 1%ige Lösung in Tetrafuran eine relative Viskosität bei 25°C zwischen 1,3 und 1,7 hat, und das genannte Interpolymer einen Trübungswert mit mindestens 80% Durchlässigkeit für das sichtbare Licht bei 640 nm hat, wenn es in einer Menge von 20% Feststoffe in einem Lösungsgemisch aus 65 Gew.% Tetrahydrofuran und 35 Gew.% Toluol berechnet auf das Gewicht des Lösungsmittelgemischs vorkommt.

5. Das Interpolymer gemäß Anspruch 4, mit einer Minimum-Heißsiegeltemperatur von 70—140°C, einer Wasserdampfdurchlässigkeitszahl (WVTR) von hochstens 3,9 g Wasser/m$^2$/24 Std. bei 38°C, einer Sauerstoffdurchlässigkeitszahl von höchstens 4,6 cm$^3$ Sauerstoff/m$^2$/24 Std./1 Atmosphäre Sauerstoff bei 25°C, einer Kristallisationsrate von 0,5 bis 2 in 15 Min. bei 80°C bei Ausfällung als Schicht aus einer Tetrahydrofuranlacklösung mit einem Schichtgewicht von 4 g/m$^2$.

6. Das Interpolymer gemäß Anspruch 4 oder 5, wobei die im allgemeinen trübungsfreie Lösung einen Trübungswert von mindestens 85% Durchlässigkeit für sichtbares Licht bei 640 nm hat.

7. Das Interpolymer gemäß Anspruch 4, in dem das genannte Interpolymer eine Mindestheißsiegelungstemperatur von 95 bis 130°C hat, wenn es als Schicht mit einem Schichtgewicht von 4 g/m$^2$ aufgetragen wird.

**Revendications**

1. Procédé de préparation en émulsion aqueuse de compositions interpolymères déterminées, contenant à l'état polymérisé (a) de 86 à 92 pour cent en mole de chlorure de vinylidène; (b) de 14 à 18 pour cent en mole d'un mélange de méthacrylate de méthyle et d'un comonomère choisi dans le groupe constitué de l'acrylonitrile, de l'acide méthacrylique, et de méthacylonitrile, ledit mélange de méthacrylate de méthyle et du comonomère présentant un rapport molaire du comonomère au méthacrylate de méthyle allant de 0,2:1 à 5:1; et (c) de 0,5 à 1,0 pour cent en poids d'acide itaconique, par rapport au poids total de (a) et de (b); lesdites compositions interpolymères ayant une viscosité relative allant de 1,3 à 1,7 à 25°C, en solution à 1 pour cent dans le tetrahydrofuranne; lesdites compositions interpolymères étant capables de former des solutions généralement exemptes de trouble quand elles sont présentes à raison de 20 pour cent de matière solide dans un mélange solvant comprenant 65 pour cent en poids de tetrahydrofuranne et 35 pour cent en poids de toluène, par rapport au poids du mélange solvant, caractérisé par les étapes successives suivantes:

(A) l'initiation de la polymérisation en émulsion par la formation d'un germe de latex, le germe de latex étant formé au cours d'un processus de polymérisation en émulsion en masse, qui comprend:

(1) l'addition d'une première charge de monomères à un milieu aqueux de polymérisation en émulsion, la première charge de monomères comprenant de 3 à 8 pour cent en poids de la quantité totale du mélange de monomères utilisée au cours de l'ensemble du procédé (QTMMEP), constituée de 86 à 92 pour cent en mole de chlorure de vinyle et de 14 à 8 pour cent en mole d'un mélange d'un comonomère de méthacrylate de méthyle et d'un comonomère choisi parmi le groupe constitué de l'acrylonitrile, l'acide méthacrylique, et le méthacylonitrile, ledit mélange de comonomères présentant un rapport molaire du comonomère au méthacrylate de méthyle allant de 0,2:1 à 5:1, le milieu de polymérisation comprenant de l'eau, un émulsifiant, et de 0,5 à 1 pour cent en poids d'acide itaconique, par rapport au mélange principal de monomères;

(2) l'addition d'un initiateur de polymérisation audit milieu de polymérisation en émulsion a un débit généralement constant;

(3) la poursuite de la formation d'un germe de latex sous pression autogène, jusqu'à ce qu'il se produise une chute de pression de 12,4 à 15,2 kPa de la pression de vapeur des monomères des le milieu de polymérisation;

(B) la poursuite de la polymérisation sous pression autogène par addition au milieu de polymérisation en émulsion:

(1) d'une seconde charge de monomères, en une quantité représentant de 85 à 94,25 pour cent en poids de la quantité totale du mélange de monomères (QTMMEP) telle que dans (A)(1), ladite seconde charge de monomères étant ajoutée à un débit généralement constant, ce débit étant suffisant pour fournir continuellement un excès de monomères n'ayant pas réagi dans le milieu de polymérisation, ledit excès allant de 2 à 10 pour cent en poids par rapport au poids du milieu de polymérisation; et

(2) de l'initiateur de polymérisation au même débit constant d'addition que dans (A)(2); et

(C) après l'addition de la totalité de la seconde charge de monomères, l'achèvement de la polymérisation, en un intervalle de temps T prédéfini, l'intervalle de temps T ayant au moins une première partie et une seconde partie, par:

(1) la poursuite de l'addition de l'initiateur de polymérisation au même débit constant d'addition que dans (A)(2) et (B)(2), l'initiateur étant ajouté le long de l'intervalle de temps T; et

(2) l'addition d'une troisième charge de monomères en une quantité représentant entre 2 et 12 pour cent en poids de la quantité totale du mélange de monomères (QTMMEP), ladite troisième charge de monomères étant ajoutée en la première partie de l'intervalle de temps T, de telle manière que la pression de vapeur des monomères dans le milieu de polymérisation en émulsion diminue doucement, comme cela est reflété par une courbe temps-pression, dans laquelle le temps est porté en abscisse et la pression en ordonnée, la courbe temps-pression ne présentant généralement pas de discontinuité du début à la fin de l'intervalle de temps T, et ayant une certaine forme, cette forme étant celle d'une ligne à concavité tournée vers le bas.

2. Procédé conforme à la revendication 1, dans lequel le mélange de monomères comprend environ 90 pour cent en mole de chlorure de vinylidène et environ 10 pour cent en mole du mélange d'acide méthacrylique et de méthacrylate de méthyle.

3. Procédé conforme à la revendication 1, dans lequel la troisième étape (C) est, immédiatement après l'addition de la totalité de la seconde charge de monomères, l'achèvement de la polymérisation en un intervalle de temps prédéterminé T, l'intervalle de temps T comportant une première fraction, une seconde fraction et une troisième fraction, par:

(1) la poursuite de l'addition de l'initiateur de polymérisation, généralement au même débit constant d'addition que dans (A)(2) et (B)(2), l'initiateur étant ajouté tout au long de l'intervalle de temps T; et

(2) l'addition d'une troisième charge de monomères en une quantité représentant d'environ 1,76 pour cent à 12 pour cent en poids de la quantité totale du mélange de monomère (QTMMEP), ladite troisième charge de monomères étant ajoutée au cours de l'intervalle de temps T, au débit continu suivant:

(a) environ la moitié du débit d'addition de la seconde charge de monomères telle que dans (B)(1) pendant la première fraction de l'intervalle de temps T, cette première fraction étant d'environ T/6;

(b) environ un quart du débit d'addition de la seconde charge de monomères telle que dans (B)(1) pendant la seconde fraction de l'intervalle de temps T, cette seconde fraction étant d'environ T/3; et

(c) l'addition de l'initiateur seule durant la troisième fraction, cette troisième fraction étant d'environ T/2.

4. Composition interpolymère cristalline déterminée, contenant à l'état polymérisé (a) de 86 à 92 pour cent en mole de chlorure de vinylidène; (b) de 14 à 8 pour cent en mole d'un mélange de méthacrylate de méthyle et d'un comonomère choisi dans le groupe constitué par l'acrylonitrile, l'acide méthacrylique et le méthacrylonitrile, ledit mélange de méthacrylate de méthyle et de comonomère présentant un rapport molaire du comonomère au méthacrylate de méthyle allant de 0,2:1 à 5:1; et (c) de 0,5 à 1,0 pour cent en poids d'acide itaconique, par rapport au poids total de (a) et (b); ledit interpolymère présentant une viscosité relative allant de 1,3 à 1,7 à 25°C, en solution à 1 pour cent dans le tetrahydrofuranne; ledit interpolymère présentant une valeur de turbidité d'au moins 80 pour cent de transmission de la lumière visible à 640 nanomètres lorsqu'il est présent en une quantité de 20 pour cent de matière solide dans un mélange de solvant constitué de 65 pour cent en poids de tetrahydrofuranne et de 35 pour cent en poids de toluène par rapport au poids du mélange de solvant.

5. Interpolymère conforme à la revendication 4, présentant également une température minimale de soudage à chaud allant de 70 à 140°C, un taux de transmission de la vapeur d'eau non supérieur à 3,9 g d'eau par mètre carré par 24 heures à 38°C, un taux de transmission de l'oxygène non supérieur à 4,6 centimètre cube d'oxygène par mètre carré par 24 heures sous un atm. d'oxygène à 25°C, et un taux de cristallisation à 15 minutes à 80°C de 0,5 à 2 lorsqu'il est déposé en tant que revêtement, à partir d'une solution laque dans le tetrahydrofuranne, avec un poids de revêtement de 4 grammes par mètre carré.

6. Interpolymère conforme à la revendication 4 ou 5, dans lequel la solution généralement limpide possède une valeur de turbidité d'au moins 85 pour cent de transmission de la lumière visible à 640 nanomètres.

7. Interpolymère conforme à la revendication 4, dans lequel ledit interpolymère possède une température minimale de soudage à chaud allant de 95°C à 130°C, lorsqu'il est déposé en tant que revêtement avec un poids de revêtement de 4 g par mètre carré.

step A            step B            step C

Pressure

0   1   2   3   4   5   6   7   8   9   10   11   12   13   14. 14.5 14.1 15.1 15.4 15.7 16.0

Time (Hrs.)

Fig. 1

0 068 461

Fig. 2